# EUROPEAN PATENT SPECIFICATION

(11) **EP 4 459 184 B1**
(45) Date of publication and mention of the grant of the patent: **04.11.2026**
(21) Application number: 22915901.7
(22) Date of filing: 22.12.2022
(51) Int. Cl.: F23D 17/00, F23C 1/12

(54) **BURNER AND COMBUSTION FURNACE**
BRENNER UND VERBRENNUNGSOFEN
BRÛLEUR ET FOUR À COMBUSTION

(30) Priority: 27.12.2021 JP 2021212246
(43) Date of publication of application: 06.11.2024
(73) Proprietor: KAWASAKI JUKOGYO KABUSHIKI KAISHA, Kobe-shi, Hyogo 650-8670 (JP)
(72) Inventor: TANIGUCHI, Koji, Kobeshi, Hyogo 650-8670 (JP); KATO, Atsunori, Kobe-shi, Hyogo 650-8670 (JP); YABARA, Suguru, Kobe-shi, Hyogo 650-8670 (JP); YAMAGUCHI, Taishin, Kobe-shi, Hyogo 650-8670 (JP)
(74) Representative: Leinweber & Zimmermann
(86) International application number: PCT/JP2022/047291
(87) International publication number: WO 2023/127678

(56) References cited:
- EP-A1- 3 798 514
- WO-A1-2019/225382
- WO-A1-2020/202362
- JP-Y2- S 599 155
- US-A1- 2019 249 922

## Description

### Technical Field

The present disclosure relates to a burner that uses gas fuel as auxiliary fuel, and a combustion furnace including the burner.

### Background Art

According to the current trend regarding the reduction of carbon dioxide (CO₂), the use of CO₂-free fuel which does not generate carbon dioxide in a thermal power boiler is required. Examples of such fuel include hydrogen (H₂) and ammonia (NH₃) as hydrogen-rich gas fuel. For example, PTL 1 discloses a burner that can perform multi-fuel combustion of solid fuel and ammonia.

The burner of PTL 1 includes: a fuel supply nozzle that discharges a fuel-air mixture containing solid fuel, such as pulverized coal, and a carrier gas for the solid fuel; an air nozzle that is located outside the fuel supply nozzle and discharges combustion air so as to separate the combustion air from the fuel-air mixture outward in a radial direction; and an ammonia supply nozzle that discharges an ammonia gas from a downstream side of an outlet of the fuel supply nozzle. The ammonia supply nozzle supplies the ammonia gas toward a reduction region (primary combustion region) where an oxygen concentration is low since oxygen is consumed by the combustion of the fuel at an immediately downstream side of the outlet of the fuel supply nozzle.

### Citation List

### Patent Literature

PTL 1: Japanese Laid-Open Patent Application Publication No. 2019-203631

### Summary of Invention

### Technical Problem

According to the structure of the burner disclosed in PTL 1, the strongest high-temperature reduction region is generated in front of a portion between the outlet of the fuel supply nozzle and the outlet of the air nozzle. At this position, a circulating vortex is generated by the flow of the fuel-air mixture and the flows of secondary air and tertiary air located at an outer peripheral side of the fuel-air mixture. Since combustible components and heat are kept in this circulating vortex, a condition for easily causing combustion is maintained, and the circulating vortex becomes an origin of ignition. In addition, the high-temperature reduction region is generated in the circulating vortex and at a downstream side of the circulating vortex. Therefore, it is thought that from the viewpoint of the improvement of combustion efficiency, discharging gas fuel such as ammonia toward the circulating vortex is more advantageous than discharging the ammonia toward the primary combustion region as in PTL 1. On the other hand, when the flow velocity of the gas fuel discharged toward the circulating vortex increases, there are concerns that: the flow of the circulating vortex is disturbed by the jet flow of the gas fuel; and the combustion reaction in the circulating vortex is suppressed since the temperature of the circulating vortex is reduced by the inflow of unreacted gas fuel.

The present invention was made under these circumstances, and an object of the present invention is to propose the structure of a burner which uses gas fuel as auxiliary fuel and may improve combustion efficiency of the gas fuel while preventing a circulating vortex from being disturbed and preventing a combustion reaction in the circulating vortex from being deteriorated.
A burner according to the preamble of claim 1 is known from US 2019/249922 A1.

### Solution to Problem

In order to solve the above problems, a burner according to one aspect of the present invention includes a multiple pipe including an inner pipe and outer pipes. The inner pipe and the outer pipes are located coaxially about a burner axis. The outer pipes are located outside the inner pipe. The multiple pipe includes: a fuel discharge port which is located at a downstream end of the inner pipe and discharges a fuel-air mixture containing main fuel and primary combustion air which have been supplied to the inner pipe; a secondary air outlet which is located at an outer peripheral side of the fuel discharge port and emits secondary combustion air which has been supplied to between the outer pipes; and an annular gas fuel outlet which is located between the fuel discharge port and the secondary air outlet and emits gas fuel as auxiliary fuel which has been supplied to between the inner pipe and the outer pipes, toward a boundary between flow of the fuel-air mixture and flow of the secondary combustion air.

A combustion furnace according to one aspect of the present invention includes: a high-temperature reduction zone which has a reduction atmosphere and at which at least one burner according to any one of claims 1 to 4 is located; and a low-temperature oxidation zone which has an oxidizing atmosphere and is lower in temperature than the high-temperature reduction zone and into which a combustion gas generated in the high-temperature reduction zone flows.

### Advantageous Effects of Invention

The above aspect of the present invention can propose the structure of the burner which uses the gas fuel as the auxiliary fuel and may improve the combustion efficiency of the gas fuel while preventing the circulating vortex from being disturbed and preventing the combustion reaction in the circulating vortex from being deteriorated.

### Brief Description of Drawings

FIG. 1 is a diagram showing a schematic configuration of a boiler including burners according to one embodiment of the present invention
FIG. 2 is a schematic sectional view of the burner according to the present invention
FIG. 3 is a partial enlarged view of the burner shown in FIG. 2.
FIG. 4 is a diagram showing the burner of FIG. 2 when viewed in a burner axis direction.

### Description of Embodiments

Hereinafter, an embodiment of the present invention will be described with reference to the drawings. First, the schematic configuration of a boiler 10 including burners 5 according to one embodiment of the present invention will be described.

### Schematic Configuration of Boiler 10

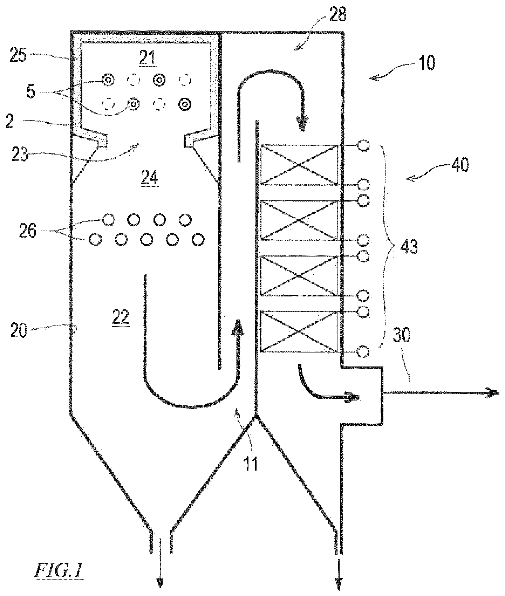

FIG. 1 is a diagram showing the schematic configuration of the boiler 10 including the burners 5 according to one embodiment of the present invention The boiler 10 shown in FIG. 1 includes: a combustion furnace 2 that combusts fuel; and a boiler main body 40 and a superheater 42 which generate steam by utilizing combustion heat of the fuel. The boiler 10 is a pulverized coal burning thermal power boiler and uses pulverized fossil fuel (solid fuel) or particulate fossil fuel (solid fuel) as main fuel. However, the boiler to which the burners 5 according to the present invention are applied is not limited to the pulverized coal burning boiler and may be a multi-fuel combustion boiler that uses pulverized coal and biomass as main fuel, a petroleum residuum burning boiler that uses petroleum residuum as main fuel, or the like.

A vertical combustion chamber 20 is located in the combustion furnace 2. The combustion furnace 2 according to the present embodiment is an inverted vertical furnace. A high-temperature reduction zone 21 is located at an upper portion of the combustion chamber 20, and a low-temperature oxidation zone 22 is located at a lower portion of the combustion chamber 20. A throat 23 is located between the high-temperature reduction zone 21 and the low-temperature oxidation zone 22. However, the combustion furnace 2 may be a vertical furnace in which: the high-temperature reduction zone 21 is located at the lower portion of the combustion chamber 20; and the low-temperature oxidation zone 22 is located at the upper portion of the combustion chamber 20. Or, the combustion furnace 2 to which the burners 5 according to the present invention are applied may be a combustion furnace other than the vertical furnace.

A portion of an inner wall of the combustion furnace 2 which defines the high-temperature reduction zone 21 is covered with a fire-resistant material 25. The burners 5 that discharge the fuel and first-stage combustion air to the high-temperature reduction zone 21 are located on a furnace wall of a lower portion of the combustion furnace 2. A fuel-air mixture containing the fuel and the air is discharged from the burners 5 into the combustion chamber 20, and flame is generated. The burners 5 are located on a pair of opposing furnace walls. At least one burner stage in an upper-lower direction is located on each furnace wall, and each burner stage includes the burners 5 lined up in a horizontal direction. The burners 5 located so as to be opposed to each other as above are located in zigzag so as to be opposed to each other such that burner axes of the burners 5 do not intersect with each other.

An outlet of the high-temperature reduction zone 21 is connected to an inlet of the low-temperature oxidation zone 22 through the throat 23. A smallest horizontal sectional area of the throat 23 is about 20 to 50% of a horizontal sectional area of the high-temperature reduction zone 21.

Air nozzles 26 are located on a furnace wall of an upper portion of the combustion furnace 2. Second-stage combustion air is discharged from the air nozzles 26 to the low-temperature oxidation zone 22. In the present embodiment, air nozzle stages are located so as to be lined up in the upper-lower direction, and each air nozzle stage includes the air nozzles 26 lined up in the horizontal direction. In the low-temperature oxidation zone 22, a cooling portion 24 is located between the throat 23 and the air nozzles 26. The furnace wall of the cooling portion 24 is a water-cooled wall at which a water pipe of the boiler main body 40 is located.

An outlet 11 of the low-temperature oxidation zone 22 is connected to an inlet of a flue 28. A heat transfer pipe 43 of the boiler main body 40 is located at the flue 28. An exhaust gas processing system 30 is connected to an outlet of the flue 28.

In the boiler 10 configured as above, an air ratio of the fuel and the first-stage combustion air which are supplied to the high-temperature reduction zone 21 is maintained to be less than one (for example, about 0.7). In addition, a furnace internal temperature of the high-temperature reduction zone 21 surrounded by the fire-resistant material 25 hardly decreases compared to the temperature of the other furnace portion. Therefore, the atmosphere of the high-temperature reduction zone 21 is a high-temperature reduction atmosphere (atmosphere where the amount of air is smaller than the theoretical amount of air, i.e., the amount of air is inadequate) where the average temperature is about 1,500°C. In the high-temperature reduction zone 21, the gasification of the fuel is promoted.

In the high-temperature reduction zone 21, a combustion gas is generated by the gasification of the fuel. The generated combustion gas flows into the low-temperature oxidation zone 22 through the throat 23. The air ratio in the low-temperature oxidation zone 22 is maintained to be one or more (for example, about 1.1) by the second-stage combustion air supplied from the air nozzles 26 to the low-temperature oxidation zone 22. Therefore, the atmosphere of the low-temperature oxidation zone 22 is the oxidizing atmosphere, and thus, the combustion of the combustion gas is promoted in the low-temperature oxidation zone 22.

In the low-temperature oxidation zone 22, the combustion of an unburned portion of the combustion gas is completed. A flue gas from the low-temperature oxidation zone 22 flows out to the exhaust gas processing system 30 through the flue 28. The heat of the flue gas is recovered by the heat transfer pipe 43 located at the flue 28 and the furnace wall, and the steam is generated by the boiler main body 40. The generated steam is utilized by, for example, a steam turbine of a power generation facility.

### Burner 5

The burner 5 included in the boiler 10 configured as above is a multi-fuel combustion burner that uses the solid fuel as the main fuel and utilizes hydrogen-containing gas fuel as auxiliary fuel. The solid fuel is, for example, pulverized fossil fuel or particulate fossil fuel, such as pulverized coal. In the present embodiment, an ammonia gas containing hydrogen and nitrogen is adopted as the gas fuel. However, a hydrogen gas or a by-product gas generated at a plant may be used as the gas fuel.

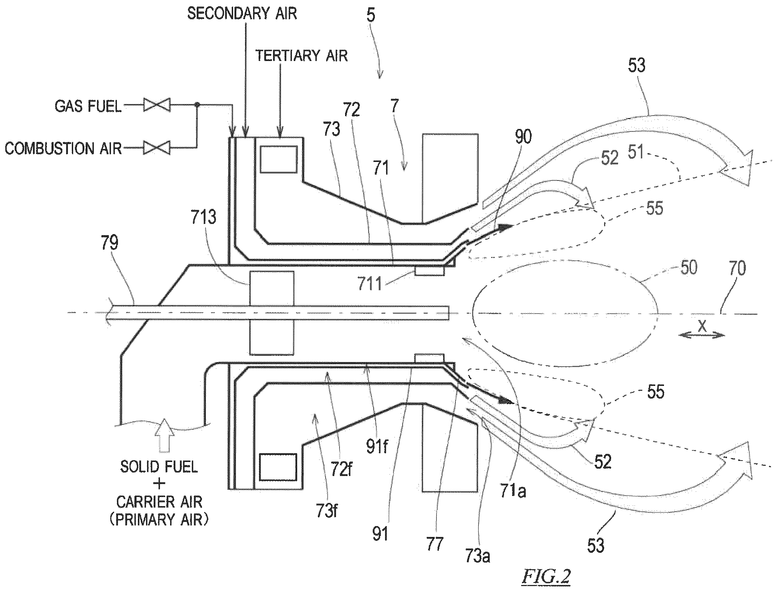

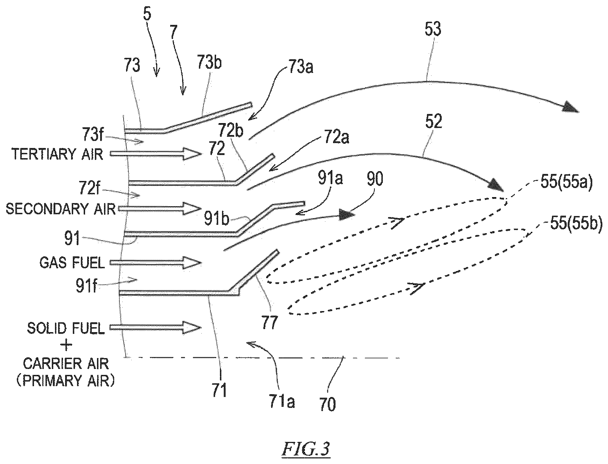

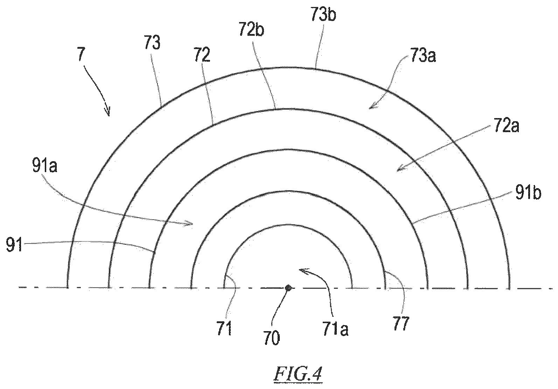

FIG. 2 is a schematic sectional view of the burner 5 according to the present invention FIG. 3 is an enlarged view showing a fuel discharge port 71a of the burner 5 of FIG. 2 and its vicinity. FIG. 4 is a diagram showing the burner 5 of FIG. 2 when viewed in a burner axis direction X. As shown in FIGS. 2, 3, and 4, the burner 5 includes a multiple pipe 7 including pipes located coaxially about a predetermined burner axis 70. A direction in which the burner axis 70 extends is referred to as the "burner axis direction X." The multiple pipe 7 includes: an inner pipe 71 extending in the burner axis direction X; and outer pipes (i.e., a first outer pipe 91, a second outer pipe 72, and a third outer pipe 73) located outside the inner pipe 71.

The inner pipe 71 is supplied with powdered solid fuel and carrier air that carries the solid fuel. The carrier air is primary air (primary combustion air). A first flame holding plate 77 that is continuous in a circumferential direction is located at a downstream end of the inner pipe 71. The first flame holding plate 77 increases in diameter toward the downstream end of the inner pipe 71 in a trumpet shape. The fuel discharge port 71a is defined by the first flame holding plate 77 at the downstream end of the inner pipe 71. A fuel-air mixture 51 containing the solid fuel and the carrier air is discharged from the fuel discharge port 71a.

A swirling adjustment plate 711 is located inside the downstream end of the inner pipe 71 and upstream of the first flame holding plate 77. A dispersion blade 713 is located inside the inner pipe 71 and upstream of the swirling adjustment plate 711.

A heavy oil burner 79 through which the burner axis 70 extends is inserted into a center axis portion of the inner pipe 71. A downstream end portion of the heavy oil burner 79 is located in the vicinity of a downstream end portion of the inner pipe 71. Therefore, a passage section of the downstream end of the inner pipe 71 has an annular shape (in other words, a doughnut shape) about the burner axis 70.

The first outer pipe 91 is located at an outer peripheral side of the inner pipe 71. A first passage 91f having an annular passage section is defined between the inner pipe 71 and the first outer pipe 91. The first passage 91f is supplied with a gas fuel 90 from a gas fuel source. Moreover, a gas supplied to the first passage 91f may be selectively switched between the gas fuel 90 and the combustion air.

A gas fuel outlet 91a that is a downstream end of the first passage 91f is an annular opening located at an outer peripheral side of the fuel discharge port 71a of the inner pipe 71, i.e., an opening that is continuous in the circumferential direction. The gas fuel 90 is emitted from the gas fuel outlet 91a at an outer peripheral side of the fuel-air mixture 51 discharged from the inner pipe 71.

A gas fuel guide 91b that increases in diameter toward the downstream side in a trumpet shape is located at a downstream end of the first outer pipe 91. A downstream end of the gas fuel guide 91b may be located upstream or downstream of a downstream end of the first flame holding plate 77. The downstream end of the gas fuel guide 91b is directed toward an inner peripheral side relative to the burner axis direction X. Therefore, the gas fuel 90 emitted from the gas fuel outlet 91a is guided so as to approach the fuel-air mixture 51 discharged from the inner pipe 71, in other words, so as to flow inward in a radial direction.

The second outer pipe 72 is located at an outer peripheral side of the first outer pipe 91. A second passage 72f having an annular passage section is defined between the second outer pipe 72 and the first outer pipe 91. The second passage 72f is supplied with secondary air 52 (secondary combustion air). A secondary air outlet 72a that is a downstream end of the second passage 72f is located at an outer peripheral side of the gas fuel outlet 91a and emits the secondary air 52 at an outer peripheral side of the gas fuel 90 emitted from the gas fuel outlet 91a.

The third outer pipe 73 is located at an outer peripheral side of the second outer pipe 72. A third passage 73f having an annular passage section is defined between the third outer pipe 73 and the second outer pipe 72. As above, in the burner 5, three passages are located at an outer peripheral side of the inner pipe 71 by the multiple pipe 7. The third passage 73f is supplied with tertiary air 53 (tertiary combustion air) from a wind box. A tertiary air outlet 73a that is a downstream end of the third passage 73f is located at an outer peripheral side of the secondary air outlet 72a and emits the tertiary air 53 at an outer peripheral side of the secondary air 52 discharged from the secondary air outlet 72a.

A second flame holding plate 72b that increases in diameter toward the downstream side in a trumpet shape is located at a downstream end of the second outer pipe 72. The downstream end of the gas fuel guide 91b may be located upstream or downstream of a downstream end of the second flame holding plate 72b. Moreover, an outer guide 73b that increases in diameter toward the downstream side in a trumpet shape is located at an opening edge of a downstream end of the third outer pipe 73. The secondary air 52 discharged from the secondary air outlet 72a is guided by the first flame holding plate 77 and the second flame holding plate 72b so as to flow away from the fuel-air mixture 51 discharged from the inner pipe 71, i.e., flow outward in the radial direction. Moreover, the tertiary air 53 discharged from the third outer pipe 73 is guided by the second flame holding plate 72b and the outer guide 73b so as to flow away from the secondary air 52 discharged from the second outer pipe 72, i.e., flow outward in the radial direction.

In the burner 5 configured as above, the fuel-air mixture 51 containing the solid fuel and the primary air which have been supplied to the inner pipe 71 is discharged as swirling flow from the fuel discharge port 71a by the actions of the dispersion blade 713 and the swirling adjustment plate 711. Moreover, at an outer peripheral side of the fuel discharge port 71a, the secondary air 52 is emitted from the secondary air outlet 72a, and the tertiary air 53 is emitted from the tertiary air outlet 73a. The secondary air 52 is emitted so as to spread outward in the radial direction about the burner axis 70 by the actions of the gas fuel guide 91b and the second flame holding plate 72b. Similarly, the tertiary air 53 is emitted so as to spread outward in the radial direction by the actions of the second flame holding plate 72b and the outer guide 73b.

A circulating vortex 55 is generated at a boundary between the flow of the fuel-air mixture 51 and the flow of the secondary air 52 by a pressure decrease. A high-temperature combustion gas stays in the circulating vortex 55. In the present embodiment, as shown in FIG. 3, an outer circulating vortex 55a and an inner circulating vortex 55b located at a radially inner side of the outer circulating vortex 55a are generated. Each of the outer circulating vortex 55a and the inner circulating vortex 55b includes: forward flow flowing toward the downstream side; and reverse flow returning to the upstream side. A circulating region 50 is generated at a radially inner side of the circulating vortex 55 by the swirling of the tertiary air 53. In the circulating region 50, circulating flow by which discharging flow of the fuel-air mixture 51 from the fuel discharge port 71a is made to return to the fuel discharge port 71a is generated, and the high-temperature combustion gas and the unburned circulating gas are exchanged with each other at all times. Thus, volatile components of the solid fuel in the fuel-air mixture 51 are quickly combusted, and outer periphery ignited flame is generated in the circulating vortex 55. Moreover, the combustion air and the fuel-air mixture 51 are mixed with each other sequentially in order of the secondary air 52 and the tertiary air 53, and this generates the combustion.

The burner 5 is switchable between single-fuel combustion of the solid fuel and multi-fuel combustion of the solid fuel and the gas fuel. At the time of the single-fuel combustion of the solid fuel, the combustion air is supplied to the first passage 91f, or the supply of the gas fuel to the first passage 91f is stopped. At the time of the multi-fuel combustion of the solid fuel and the gas fuel, the gas fuel 90 is supplied to the first passage 91f and emitted from the gas fuel outlet 91a. The burner 5 can switch the single-fuel combustion and the multi-fuel combustion without stopping the operation of the boiler 10.

The flow of the gas fuel 90 emitted from the gas fuel outlet 91a joins outermost flow of the circulating vortex 55, i.e., the forward flow flowing toward the downstream side, by the action of the gas fuel guide 91b. Thus, the gas fuel 90 is taken in the circulating vortex 55 that is the origin of the ignition. As a result, the gas fuel 90 can be efficiently combusted.

### Conclusion

As described above, the burner 5 of the invention includes the multiple pipe 7 including the inner pipe 71 and the outer pipes 91 72, and 73, the inner pipe 71 and the outer pipes 91 72, and 73 being located coaxially about the burner axis 70, the outer pipes 91 72, and 73 being located outside the inner pipe 71.

Then, the multiple pipe 7 includes:
the fuel discharge port 71a which is located at the downstream end of the inner pipe 71 and discharges the fuel-air mixture 51 containing the main fuel and the primary combustion air which have been supplied to the inner pipe 71;
the secondary air outlet 72a which is located at an outer peripheral side of the fuel discharge port 71a and emits the secondary combustion air 52 which has been supplied to between the outer pipes 91 and 72; and
the annular gas fuel outlet 91a which is located between the fuel discharge port 71a and the secondary air outlet 72a and emits the gas fuel 90 as the auxiliary fuel which has been supplied to between the inner pipe 71 and the outer pipes 91, 72, and 73, toward the boundary between the flow of the fuel-air mixture 51 and the flow of the secondary combustion air 52.

According to the burner 5 configured as above, the gas fuel 90 discharged from the gas fuel outlet 91a located between the fuel discharge port 71a and the secondary air outlet 72a flows toward the circulating vortex 55 generated at the boundary between the flow of the fuel-air mixture 51 and the flow of the secondary air 52 and joins the flow of the circulating vortex 55. The gas fuel outlet 91a is an annular opening that surrounds the fuel discharge port 71a. Therefore, as compared to a case where the gas fuel outlet includes small-diameter nozzles and supplies the same amount of gas fuel 90, a discharge speed of the gas fuel 90 can be suppressed. Thus, it is possible to suppress a case where the circulating vortex 55 is disturbed by the joining of the gas fuel 90 and a case where a combustion reaction in the circulating vortex 55 is deteriorated by the temperature decrease of the circulating vortex 55.

The burner 5 may include the gas fuel guide 91b by which the gas fuel 90 emitted from the gas fuel outlet 91a is guided to the circulating vortex 55 generated at the boundary between the flow of the fuel-air mixture 51 and the flow of the secondary air 52. Herein, it is further desirable that the gas fuel guide 91b guides the gas fuel 90 such that the gas fuel 90 contacts the forward flow of the circulating vortex 55, the forward flow flowing toward the downstream side.

When the gas fuel 90 is emitted so as to contact the reverse flow of the circulating vortex 55 which flows toward the upstream side, the circulating vortex 55 may be disturbed by the flow of the gas fuel 90. However, in the burner 5 according to the present invention, the gas fuel guide 91b guides the flow of the gas fuel 90 such that the gas fuel 90 contacts the forward flow of the circulating vortex 55 which flows toward the downstream side. Therefore, the gas fuel 90 is taken in the circulating vortex 55 without disturbing the flow of the circulating vortex 55.

In the burner 5, the gas fuel outlet 91a may be switchable so as to emit the combustion air instead of the gas fuel 90.

The burner 5 configured as above is switchable between the combustion of only the main fuel and the combustion of the main fuel and the auxiliary fuel. In the above embodiment, the solid fuel is used as the main fuel. However, the main fuel may be gas fuel or liquid fuel. Moreover, the main fuel and the auxiliary fuel may be the same type of fuel. Or, in the burner 5 configured as above, the gas fuel 90 may be an ammonia gas.

Moreover, the combustion furnace 2 according to the present invention includes: the high-temperature reduction zone 21 which has a reduction atmosphere and at which at least one burner 5 is located; and the low-temperature oxidation zone 22 which which has an oxidizing atmosphere and is lower in temperature than the high-temperature reduction zone 21 and into which the combustion gas generated in the high-temperature reduction zone 21 flows.

According to the combustion furnace 2 configured as above, the multi-fuel combustion of the solid fuel and the gas fuel containing a large amount of nitrogen is performed in the high-temperature reduction zone 21. Thus, in-furnace NOx removal of NOx generated from the solid fuel and the nitrogen contained in the gas fuel is performed, and therefore, the discharge of the NOx can be suppressed. Moreover, a water gas shift reaction in which water generated from the solid fuel and/or the hydrogen contained in the gas fuel is converted into an activated gas is caused. Thus, the combustion efficiency can be improved. Herein, when the gas fuel is the ammonia gas, a large amount of water which is subjected to the water gas shift reaction is generated. Therefore, the combustion efficiency can be further improved.

The foregoing discussion of the disclosure has been presented for purposes of illustration and description. The foregoing is not intended to limit the disclosure to the form or forms disclosed herein. In the foregoing Detailed Description for example, various features of the disclosure are grouped together in one embodiment for the purpose of streamlining the disclosure. The features of the disclosure may be combined in alternate embodiments, configurations, or aspects other than those discussed above.

## Claims

1. A burner (5) comprising a multiple pipe (7) including an inner pipe (71) and outer pipes (91, 72, 73), the inner pipe (71) and the outer pipes (91, 72, 73) being located coaxially about a burner axis (70), the outer pipes (91, 72, 73) being located outside the inner pipe (71),
the multiple pipe (7) including:
a fuel discharge port (71a) which is located at a downstream end of the inner pipe (71) and discharges a fuel-air mixture (51) containing main fuel and primary combustion air which have been supplied to the inner pipe (71);
a secondary air outlet (72a) which is located at an outer peripheral side of the fuel discharge port (71a) and emits secondary combustion air (52) which has been supplied to between the outer pipes (91, 72, 73); and
an annular gas fuel outlet (91a) which is located between the fuel discharge port (71a) and the secondary air outlet (72a) and emits gas fuel (90) as auxiliary fuel which has been supplied to between the inner pipe (71) and the outer pipes (91, 72, 73), toward a boundary between flow of the fuel-air mixture (51) and flow of the secondary combustion air (52),
**characterized in that**
the burner (5) further comprises a gas fuel guide (91b) by which the gas fuel (90) emitted from the gas fuel outlet (91a) is guided to a circulating vortex (55) generated at the boundary between the flow of the fuel-air mixture (51) and the flow of the secondary combustion air (52).

2. The burner (5) according to claim 1, wherein the gas fuel guide (91b) guides the gas fuel (90) such that the gas fuel (90) contacts forward flow of the circulating vortex (55), the forward flow flowing toward a downstream side.

3. The burner (5) according to claim 1 or 2, wherein the gas fuel outlet (91a) is switchable so as to emit combustion air instead of the gas fuel (90).

4. The burner (5) according to any one of claims 1 to 3, wherein the gas fuel (90) is an ammonia gas.

5. A combustion furnace (2) comprising:
a high-temperature reduction zone (21) which has a reduction atmosphere and at which at least one burner (5) according to any one of claims 1 to 4 is located; and
a low-temperature oxidation zone (22) which has an oxidizing atmosphere and is lower in temperature than the high-temperature reduction zone (21) and into which a combustion gas generated in the high-temperature reduction zone (21) flows.

## Patentansprüche

1. Brenner (5) umfassend ein Mehrfachrohr (7) mit einem Innenrohr (71) und Außenrohren (91, 72, 73), wobei das Innenrohr (71) und die Außenrohre (91, 72, 73) koaxial um eine Brennerachse (70) herum angeordnet sind, wobei die Außenrohre (91, 72, 73) außerhalb des Innenrohrs (71) angeordnet sind,
wobei das Mehrfachrohr (7) Folgendes einschließt:
eine Brennstoffauslassöffnung (71a), die an einem stromabwärtigen Ende des Innenrohrs (71) angeordnet ist und ein Brennstoff-Luft-Gemisch (51) ausstößt, das einen Hauptbrennstoff und Primärverbrennungsluft enthält, die dem Innenrohr (71) zugeführt wurden;
einen Sekundärluftauslass (72a), der an einer Außenumfangsseite der Brennstoffauslassöffnung (71a) angeordnet ist und Sekundärverbrennungsluft (52) emittiert, die zwischen die Außenrohre (91, 72, 73) zugeführt wurde; und
einen ringförmigen Gasbrennstoffauslass (91a), der zwischen der Brennstoffauslassöffnung (71a) und dem Sekundärluftauslass (72a) angeordnet ist und Gasbrennstoff (90) als zusätzlichen Brennstoff emittiert, der zwischen das Innenrohr (71) und die Außenrohre (91, 72, 73) zugeführt wurde, in Richtung einer Begrenzung zwischen der Strömung des Brennstoff-Luft-Gemischs (51) und der Strömung der Sekundärverbrennungsluft (52),
**dadurch gekennzeichnet, dass**
der Brenner (5) ferner eine Gasbrennstoffführung (91b) umfasst, durch die der aus dem Gasbrennstoffauslass (91a) emittierte Gasbrennstoff (90) zu einem zirkulierenden Wirbel (55) geleitet wird, der an der Begrenzung zwischen der Strömung des Brennstoff-Luft-Gemischs (51) und der Strömung der Sekundärverbrennungsluft (52) erzeugt wird.

2. Brenner (5) nach Anspruch 1, wobei die Gasbrennstoffführung (91b) den Gasbrennstoff (90) derart führt, dass der Gasbrennstoff (90) mit der Vorwärtsströmung des zirkulierenden Wirbels (55) in Kontakt kommt, wobei die Vorwärtsströmung in Richtung einer stromabwärtigen Seite verläuft.

3. Brenner (5) nach Anspruch 1 oder 2, wobei der Gasbrennstoffauslass (91a) so umschaltbar ist, dass anstelle des Gasbrennstoffs (90) Verbrennungsluft emittiert wird.

4. Brenner (5) nach einem der Ansprüche 1 bis 3, wobei es sich bei dem Gasbrennstoff (90) um Ammoniakgas handelt.

5. Verbrennungsofen (2), der Folgendes umfasst:
eine Hochtemperatur-Reduktionszone (21), die eine Reduktionsatmosphäre aufweist und in der mindestens ein Brenner (5) nach einem der Ansprüche 1 bis 4 angeordnet ist; und
eine Niedertemperatur-Oxidationszone (22), die eine Oxidationsatmosphäre aufweist und deren Temperatur niedriger ist als die der Hochtemperatur-Reduktionszone (21) und in die ein in der Hochtemperatur-Reduktionszone (21) erzeugtes Verbrennungsgas strömt.

## Revendications

1. Brûleur (5) comprenant un tuyau multiple (7) comportant un tuyau intérieur (71) et des tuyaux extérieurs (91, 72, 73), le tuyau intérieur (71) et les tuyaux extérieurs (91, 72, 73) étant agencés coaxialement autour d'un axe de brûleur (70), les tuyaux extérieurs (91, 72, 73) étant agencés à l'extérieur du tuyau intérieur (71),
le tuyau multiple (7) comportant :
un orifice de sortie de combustible (71a) qui est agencé à une extrémité aval du tuyau intérieur (71) et duquel s'échappe un mélange combustible-air (51) contenant du combustible principal et de l'air de combustion primaire qui ont été fournis au tuyau intérieur (71),
une sortie d'air secondaire (72a) qui est agencée sur le côté périphérique extérieur de l'orifice de sortie de combustible (71a) et de laquelle sort de l'air de combustion secondaire (52) qui a été fourni entre les tuyaux extérieurs (91, 72, 73), et
une sortie annulaire de gaz combustible (91a) qui est agencée entre l'orifice de sortie de combustible (71a) et la sortie d'air secondaire (72a) et de laquelle sort du gaz combustible (90) servant de combustible auxiliaire, qui a été fourni entre le tuyau intérieur (71) et les tuyaux extérieurs (91, 72, 73), vers une limite existant entre le flux du mélange air-combustible (51) et le flux de l'air de combustion secondaire (52) ;
**caractérisé en ce que**
le brûleur (5) comprend en outre un guide de gaz combustible (91b) grâce auquel le gaz combustible (90) sortant de la sortie de gaz combustible (91a) est guidé vers un tourbillon circulant (55) généré à la limite entre le flux du mélange air-combustible (51) et le flux de l'air de combustion secondaire (52).

2. Brûleur (5) selon la revendication 1, dans lequel le guide de gaz combustible (91b) guide le gaz combustible (90) de façon que le gaz combustible (90) entre en contact avec le flux avant du tourbillon circulant (55), le flux avant s'écoulant vers un côté aval.

3. Brûleur (5) selon la revendication 1 ou 2, dans lequel la sortie de gaz combustible (91a) peut basculer sur une sortie d'air de combustion au lieu de gaz combustible (90).

4. Brûleur (5) selon l'une quelconque des revendications 1 à 3, dans lequel le gaz combustible (90) est de l'ammoniac.

5. Four à combustion (2) comprenant :
une zone de réduction à haute température (21) qui possède une atmosphère réductrice et dans laquelle est agencé au moins un brûleur (5) selon l'une quelconque des revendications 1 à 4, et une zone d'oxydation à basse température (22) qui possède une atmosphère oxydante et dont la température est inférieure à celle de la zone de réduction à haute température (21) et dans laquelle s'écoule un gaz de combustion généré dans la zone de réduction à haute température (21).
